# EUROPEAN PATENT SPECIFICATION

(11) **EP 1 512 577 B1**
(45) Date of publication and mention of the grant of the patent: **09.12.2009**
(21) Application number: 04020941.3
(22) Date of filing: 03.09.2004
(51) Int. Cl.: B60P 3/36, B60J 5/00

(54) **Service door for a motor vehicle**
Bedienungstür für Kraftfahrzeug
Porte de service pour véhicule motorisé

(30) Priority: 03.09.2003 US 499933 P
(43) Date of publication of application: 09.03.2005
(73) Proprietor: Thetford Corporation, Ann Arbor, Michigan 48106 (US)
(72) Inventor: Rijn, Gerard C., 4872 MR Etten-Leur (NL); Schagen, Frank, 4835 CB Breda (NL); Groenendijk, Edwin, 2320 Hoogstraten (BE)
(74) Representative: Grosse, Rainer

(56) References cited:
- EP-A- 0 799 743
- EP-A- 1 087 087
- EP-A- 1 362 729
- DE-A1- 10 146 920

## Description

### FIELD OF THE INVENTION

This invention is related to doors for recreational vehicles (RVs) which are used to alternatively seal off and provide access to internal compartments and more particularly to an improved type of flush mounted service door assembly for a recreational vehicle which offers substantial improvements in appearance and assembly.

### BACKGROUND OF THE INVENTION

Vehicles, including but not limited to recreational vehicles which are commonly referred to in the United States as RVs and in Europe as caravans, often incorporate exterior service doors for accessing internal compartments. For example, known service doors are shown and described in commonly assigned U.S. Pat. Nos. 5,746,466 and 4,906,033 which are hereby incorporated by reference as if fully set forth herein.

U.S. Pat. No. 5,746,466 discloses a service door assembly attached to a cutout in the side wall of a recreational vehicle for alternatively closing off and providing access to an internal compartment. A body frame of the service door assembly is attached to the cut out in the side wall. A door panel is attached by a hinge to the body frame. A pair of push button latch mechanisms, one of which contains an integrated lock, retains the door panel in the closed position. The door panel includes a separate door wall and inner and outer door frames which are joined by a retaining clip. The metal retaining clip has a return bent upon itself shape and pointed wedge shaped upset portions for joining the outer and inner door frames. The hinge is formed by portions of the frame and door panel that are flush with or recessed from the maximum protrusion distance of the door panel from the side wall, joined by a hinge pin that is not accessible when the door is closed and which is designed to break away if destructive forces are placed on the door assembly.

In U.S. Pat. No. 4,906,033, a service door arrangement is disclosed in which hinge members mount the upper end of the door member on the frame for up and down swinging movement between an open position disposed above the access opening and a closed position fitting in the opening. A continuous seal carried by the door engages the frame in order to maintain the compartment water tight. Separate latching and locking functions are incorporated in the door assembly and are separately accessed from side-by-side latch and lock members in the frame at a convenient position above the door.

EP 1 362 729 A2 discloses a subassembly of a service door assembly for mounting in an opening of a sidewall having a thickness, by providing a first member and a second member, while latter secured to the first member and capturing at least a portion of the sidewall therebetween. The first and second members include cooperating means for securing the first and second members together, being so configured to automatically facilitate engagement between the first and second members as a portion of the sidewall is captured between the first and second members, preventing disengagement after the portion of the sidewall is captured between the first and second members.

EP 1 087 087 A2 discloses a door assembly for an outside compartment in a recreational vehicle consisting of a generally upright rectangular frame member defining an access opening and a door member of a size to fit in the opening. Hinge members mount the door member on the frame for swinging movement between an open position and a closed position fitting in the opening. In the closed position of the door, the frame member and the closed door are in a flush relation with the outer wall of the recreational vehicle. The frame member and a component of the hinge assembly hide the hinge mechanism to enhance the overall appearance of the recreational vehicle.

While known service doors including those described above have proven to be satisfactory for their intended uses, a need exists to continually advance the pertinent art.

### SUMMARY OF THE INVENTION

It is one general object of the present invention to provide a service door assembly having a reduced width frame that provides for an improved aesthetic appearance.

It is another object of the present invention to provide a service door assembly which reduces the required number of discrete fasteners for securing the door assembly to a recreational vehicle and for connecting components of the door assembly.

It is a related object of the present invention to provide a service door assembly having a frame with integrally formed locking tabs for engaging a sidewall of the recreational vehicle.

It is another related object of the present invention to provide a service door assembly having a door proper with inner and outer members, one of the inner and outer members being integrally formed to include a break-away element which can be hit with a hammer to operatively engage the inner and outer members.

It is another general object of the present invention to provide a service door assembly for a recreational vehicle having a reduced width frame which reduces required materials and enhances visual appearance.

It is a related object of the present invention to provide a service door assembly for a recreational vehicle having a door with inner and outer members with integrally molded attachment members to facilitate engagement and maintain a narrow profile.

It is yet another object of the present invention to provide a service door assembly for a recreational vehicle that latches at a plurality of spaced apart points.

It is another object of the present invention to provide a service door assembly for a motor vehicle that readily accommodates vehicle walls of varying thicknesses.

In one form, the present invention provides a service door assembly for mounting in an opening of a sidewall, the service door assembly includes a door frame and a door mounted to the door frame. The door frame is adapted to be disposed in the opening and includes a frame inner member and a frame outer member. The frame inner and outer members include cooperating means for automatically facilitating engagement between the first and second members as a portion of the sidewall is captured between the first and second members and prevent disengagement after the portion of the sidewall is captured between the first and second members. The cooperating means may also secure the frame inner member to the frame outer member to define a variable door frame thickness for accommodating variations in a thickness in the sidewall. The cooperating means may include one or more teeth.

In another form, the present invention provides a service door assembly for mounting in an opening of a sidewall. The service door assembly includes a door frame adapted to be disposed in the opening and a door mounted to the door frame. The door includes a door inner member and a door outer member. The door inner and outer members include cooperating means for securing the door inner member to the door outer member to define a variable door thickness for accommodating variations in a thickness of the sidewall. The cooperating means may include first and second pluralities of cooperating teeth defined by the door inner and outer members, respectively.

In yet another form, the present invention provides a subassembly of a service door assembly for mounting in an opening of a sidewall having a thickness. The subassembly includes a first member and a second member secured to the first member. The first and second members capture at least a portion of the sidewall therebetween. The first and second members include cooperating male and female elements for securing the first and second members to one another.

Additional advantages and features of the present invention will become apparent from the following description and appended claims, taken in conjunction with the accompanying drawings.

Further areas of applicability of the present invention will become apparent from the detailed description provided hereinafter. It should be understood that the detailed description and specific examples, while indicating the particular embodiments of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a perspective view of a recreational vehicle incorporating a service door assembly constructed in accordance with the teachings of a first embodiment of the present invention.

Figure 2 is an enlarged perspective view of the service door assembly of the present invention shown removed from the recreational vehicle for purposes of illustration.

Figure 3 is an exploded perspective view of the service door assembly of the first embodiment of the present invention.

Figure 4 is an enlarged front view of an inner member of the door of the service door assembly of the first embodiment of the present invention.

Figure 5 is a cross-sectional view taken along the line 5-5 of Figure 4.

Figure 6 is an enlarged view of the detail shown in circle 6 of Figure 5.

Figures 7A-7C represent a series of simplified views showing attachment of the door inner with the door outer.

Figure 8 is an enlarged side view of an inner member of the frame of the service door assembly of the first embodiment of the present invention.

Figure 9 is an enlarged view of the detail shown in circle 9 of Figure 3.

Figure 10 is a cross-sectional view taken along the line 10-10 of Figure 8.

Figure 11 is a cross-sectional view taken through a portion of the service door assembly of the first embodiment of the present invention and an adjacent portion of a sidewall of the recreational vehicle, one of the integrally formed mounting tabs of the frame shown in solid lines prior to engagement with the sidewall and shown in hidden lines subsequent to engagement with the sidewall.

Figure 12 is an enlarged perspective view of a cover plate of a locking mechanism of the service door assembly of the first embodiment of the present invention.

Figure 13 is a rear perspective view of the cover plate of Figure 12.

Figure 14 is an enlarged perspective view of one of the hinge members of a hinge assembly of the first embodiment of the present invention.

Figure 15 is a front view of the hinge member of Figure 14.

Figure 16 is a cross-sectional view taken along lines 16-16 of Figure 1, illustrating the door articulated to a closed position.

Figure 17 is a cross-sectional view similar to Figure 16 showing the door in a partially opened position in which it extends in a direction 90° to the sidewall of the recreational vehicle.

Figure 18 is another cross-sectional view similar to Figure 16 illustrating the door articulated to a fully opened position and extending in a direction parallel to the sidewall of the recreational vehicle.

Figure 19 is a front view of a door of a service door assembly of first embodiment of the present invention.

Figure 20 is a partially exploded, rear perspective view of the door of Figure 19.

Figure 21 is a cross-sectional view taken along the line 21-21 of Figure 19.

Figure 22 is an enlarged view of the detail shown in the circle A of Figure 21.

Figure 23 is a cross-sectional view taken along the line 23-23 of Figure 19.

Figure 24 is an enlarged view of the detail shown in the circle B of Figure 23.

Figure 25 is a front view of a frame of the service door assembly of the second embodiment of the present invention.

Figure 26 is a cross-sectional view taken along the line 26-26 of Figure 25.

Figure 27 is an enlarged view of the detail shown in circle C of Figure 26.

Figure 28 is an exploded view of a frame inner member and a frame outer member of a service door assembly of a third embodiment of the present invention.

Figure 29 is a cross-sectional view similar to Figure 19 illustrating the service door assembly of Figure 28.

Figure 30 is an enlarged cross-sectional view of the detail shown in circle D of Figure 29.

### DETAILED DESCRIPTION

The following description of the embodiments of the present invention is merely exemplary in nature and is in no way intended to limit the invention, its application, or uses.

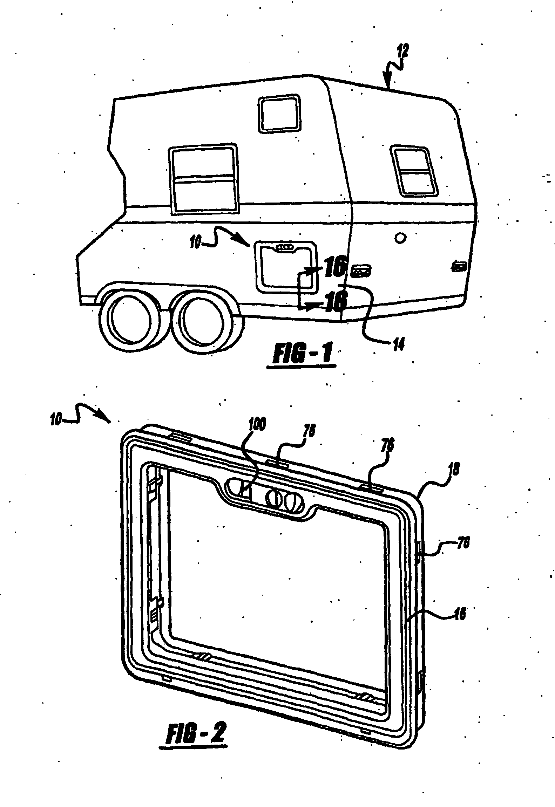

With initial reference to the environmental view of Figure 1, a service door assembly constructed in accordance with the teachings of a first embodiment of the present invention is illustrated and generally identified at reference element 10. The service door assembly 10 is shown operatively associated with a recreational vehicle 12. It will be understood by those skilled in the art that the particular recreational vehicle 12 shown in the environmental view of Figure 1 is merely exemplary and that the teachings of the present invention are applicable to other recreational vehicles, tractor trailers and virtually any other type of moving vehicle for which it is desired to provide an exterior service door for accessing external compartments. It will be further understood by those skilled in the art that the service door assembly 10 may also be for non-motorized trailers and stationary applications. The service door assembly 10 is shown mounted within an opening (not particularly shown with respect to Figure 1) of a sidewall 14 of the recreational vehicle 12.

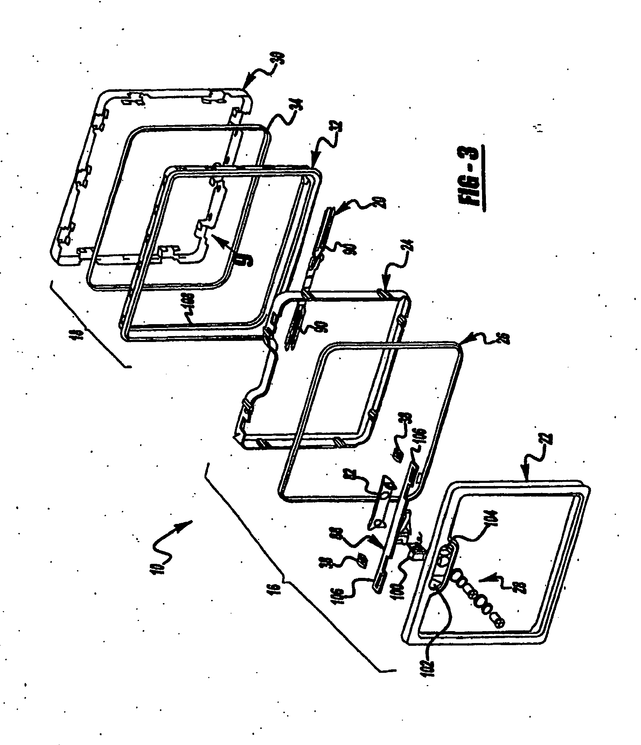

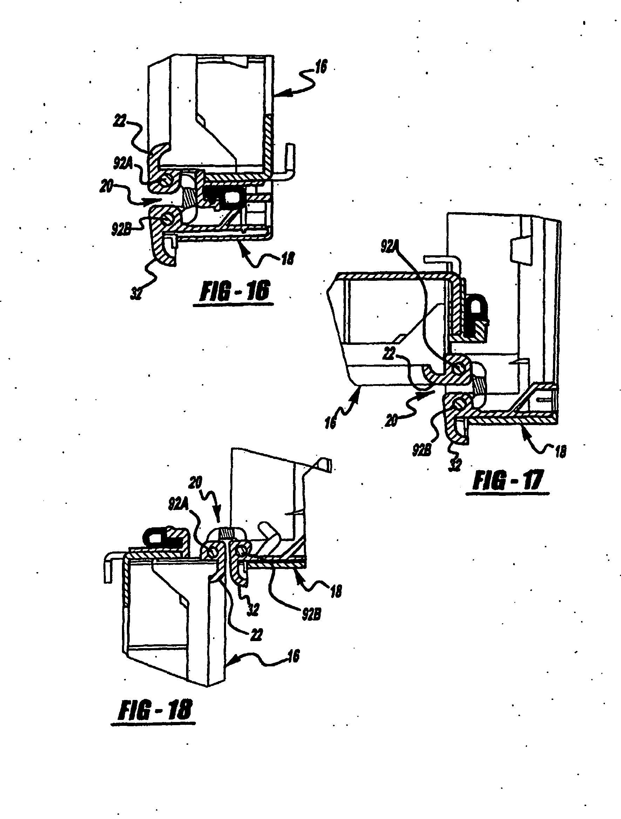

With continued reference to the environmental view of Figure 1 and additional reference to Figures 2 and 3, the service door assembly 10 of the present invention is shown to generally include a door or door proper 16 and a frame 18. The door 16 and the frame 18 are connected by a hinge assembly 20. The hinge assembly 20 defines a pivot axis about which the door 16 can articulate relative to the frame 18 between an opened position and a closed position. The closed position is shown in the environmental view of Figure 1. The open position is shown in the cross-sectional view of Figure 18, for example.

The door 16 is constructed to incorporate a portion of the sidewall 14 removed from the vehicle 12 to create the opening. As a result, the door 16 is preferably a laminated structure having an inner wall, an outer wall and a foam core. The door 16 is shown to generally include an outer member 22 and an inner member 24 (see Figure 3, for example) between which the portion of the sidewall 14 is captured. A seal 26 is also captured between the outer and inner members 22 and 24. The door 16 is further illustrated to include a locking mechanism 28 for selectively securing the door 16 to the frame 18.

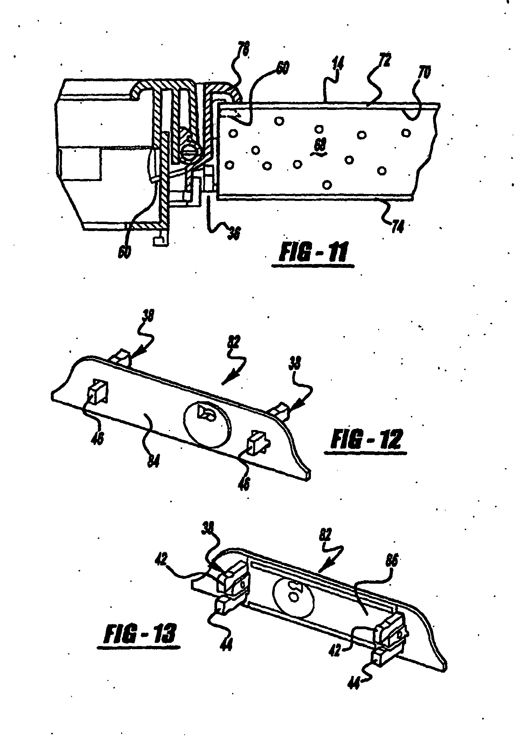

The frame 18 is illustrated to similarly generally include an inner member 30 and an outer member 32. Further similarly, a seal 34 is captured between the inner and outer member 30 and 32. In a manner to be more fully discussed below, the frame 18 is mounted within an aperture 36 (see Figure 11) defined by the sidewall 14 of the recreational vehicle 12.

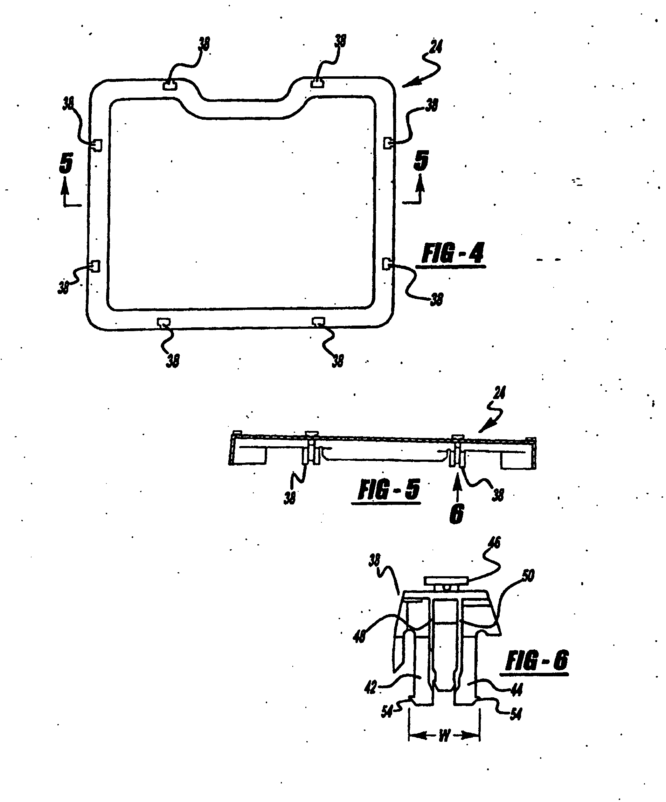

With additional reference to Figures 4-7C, the door 16 is shown to include a plurality of connecting members 38 for securely connecting the inner and outer member 22 and 24 of the door 16 without discrete fasteners. The connecting members 38 are preferably integrally formed with one of the inner and outer members 22 and 24 and in a manner discussed below are adapted to engage and be retained within openings 40 defined by the other of the inner and outer members 22 and 24 of the door 16. In the exemplary embodiment illustrated, the connecting members 38 are integrally formed with the inner member 24 of the door 16 and the cooperating openings 40 are defined by the outer member 22. Alternatively, it will become apparent to those skilled in the art that the door 16 could be designed such that the connecting members were integrally formed with the outer member 22 and the openings 40 defined by the inner member 24.

As particularly shown in Figure 4, the inner member 24 of the door is illustrated to include eight connecting members 38 spaced about the perimeter. Further in the first embodiment, each of the four sides of the inner member 24 are shown to include two connecting members 38. Those skilled in the art will readily appreciate that a greater or lesser number of connecting members 38 may be provided within the scope of the present invention so long as the connecting members 38 function to securely connect the inner and outer members 22 and 24 of the door 16.

In the particular embodiment illustrated, the connecting members 38 of the door 16 will be understood to be substantially identical to one another. For this reason, this detailed description need only to address one of the connecting members 38 for a complete understanding. As perhaps most particularly shown in the enlarged detailed view of the Figure 6, each of the connecting members 38 includes first and second parallel and spaced apart fingers 42 and 44. Each connecting member 38 further includes a pin 46 positioned between the first and second fingers 42 and 44. The pin 46 is movable relative to the first and second fingers 42 and 44 between a first position and a second position.

The first position of the pin 46 relative to the first and second fingers 42 and 44 is a molded position and is shown, for example, in Figure 6. In the first position, the pin 46 is connected to the first and second fingers 42 and 44 through breakaway connections at points 48 and 50, respectively. In the second position, which will be further described immediately hereafter, the pin 46 is moved downward relative to the first and second fingers 42 and 44 and the breakaway connection at the points 48 and 50 is destroyed.

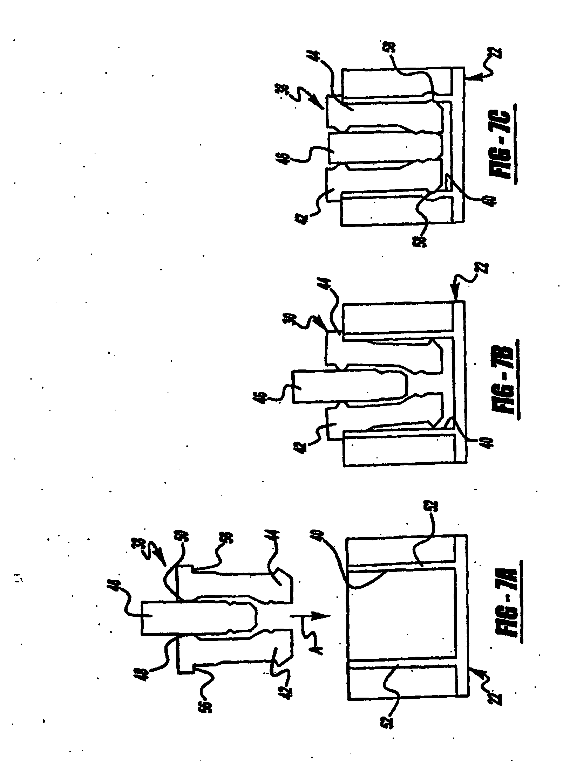

With particular reference to the series of views provided at Figures 7A-7C, cooperation of one of the connecting members 38 with an associated opening 40 defined by the inner member 22 of the door 16 will be described. In Figure 7A, the connecting member 38 is shown prior to insertion into the associated opening 40. The opening is defined by a pair of walls or fins 52. The fins 52 are substantially parallel to one another and spaced apart a distance which is slightly less than a maximum width w (see Figure 6) of the first and second fingers 42 and 44. As shown particularly in Figure 7B, upon insertion of the connecting members 38 in the direction of arrow A (see Figure 7A), the free ends of the first and second fingers 42 and 44 are urged toward one another. This movement is facilitated by tapered lead-in surfaces 54 carried by the first and second fingers 42 and 44. Insertion of the connecting member 38 is limited by flanges 56 carried at the fixed ends of the first and second fingers which abut the free ends of the fins 52.

At this point of engagement between the connecting members 38 and the openings 40, the pin 46 is struck with a hammer or similar tool to destroy the breakaway connection at the points 48 and 50 and force a lower end of the pin between the free end of the first and second fingers 42 and 44. As resultantly shown in Figure 7C, the first and second fingers 42 and 44 are returned to their initial parallel orientations and points 58 carried by the first and second fingers 42 and 44 engage the fins 52 to prevent withdrawal of the connecting member 38 relative to the opening 40.

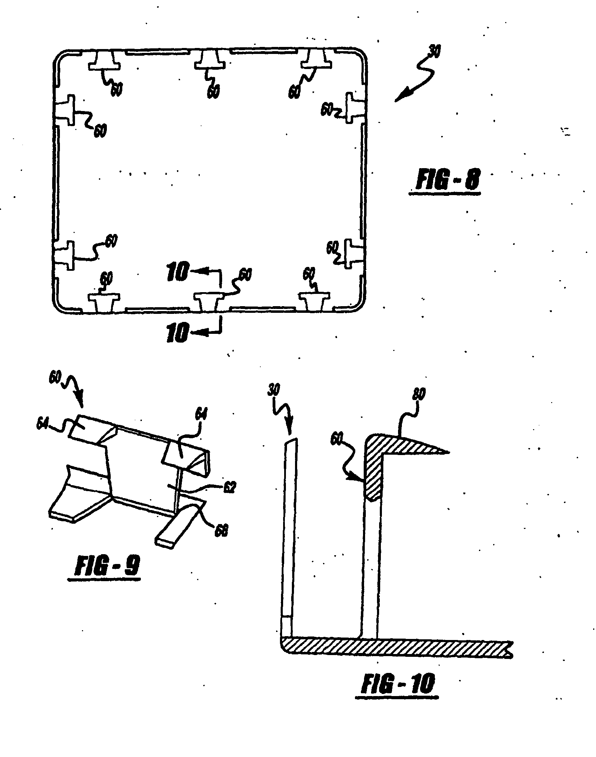

With continued reference to the exploded view of Figure 3 and additional reference to Figures 8-11, the frame 18 of the assembly 10 of the present invention is illustrated to include a plurality of integrally formed locking members or tabs 60. In the embodiment illustrated, the locking tabs are substantially identical and are integrally formed with the inner member 30 of the frame 18. Alternatively, it will be understood by those skilled in the art that the present invention can be adapted such that the locking tabs 60 are integrally formed with the outer member 32 of the frame 18. The locking tabs 60 function to secure the frame 18 to the sidewall 14 of the recreational vehicle 12 without the need for discrete fasteners.

In the particular embodiment illustrated, the inner member 30 of the frame 18 is formed to integrally include ten locking tabs 60. The locking tabs 60 are spaced about the perimeter of the inner member 30 of the frame 18 such that three locking tabs 60 are provided on each of the top and bottom sides of the inner member 30 and two locking tabs 60 are provided on each of the lateral sides of the inner 30. It will be understood by those skilled in the art that the particular number of locking tabs 60 is a matter of design choice and may be adjusted up or down within the scope of the present invention. It may be necessary to adjust the number of locking tabs 60 in response to factors such as the size of the frame 18, the construction of the recreational vehicle sidewall 14, and the like.

Each of the locking tabs 60 generally include a generally planar base portion 62 and a pair of prongs 64 depending from and generally perpendicular to the base portion 62. The base portion 62 is connected to the remainder of the inner portion 30 of the frame 18 through a living hinge 66. The living hinge 66 defines an axis about which each locking tab 60 articulates between a first position and a second position. The first position is shown, for example, in Figures 3, 9, 10 and in solid lines in Figure 11. The second position is shown, for example, in hidden lines in Figure 11. The locking tabs 60 articulate from their first positions to their second positions so to engage a foam core 68 provided in a cavity 70 defined between inner and outer panels 72 and 74 of the sidewall 14. This articulation from the first position to the second position also functions to securely connect the inner and outer members 30 and 32 of the frame 18. Explaining further, the prongs 64 of the locking tabs 60 extend through openings 76 (see Figure 2) of the outer member 32 of the frame 18. The prongs 64 displace a portion of the foam core 68. The outer panels 72 of the sidewall 14 is effectively captured between the prongs 64 and a peripheral flange portion 78 of the outer member 32 of the frame 18. In the embodiment, a surface 80 of the prong 64 positioned adjacent an inner side of the outer panel 72 has an arcuate shape to facilitate insertion of the prong 64 into the cavity 70 and also to wedge the outer panel 72 between the prongs 64 and the peripheral flange 78.

With reference to Figures 12 and 13, a cover plate 82 of the locking mechanism 28 of the assembly 10 is illustrated. The cover plate 82 is also shown in Figure 3. In the embodiment illustrated, the cover plate 82 is shown to include a pair of integrally formed locking members 38 substantially identical to those described above in connection with the inner member 24 of the door 16. The head of the pin 46 of the locking members 38 extends from a rearward surface 84. The fingers 42 and 44 extend from a forward facing surface 86 of the cover member 82. The locking members 38 of the cover plate 82 engage apertures (not shown) defined by the outer member 22 of the door 16.

Substantially identical locking members are used to secure a sliding lock plate 88 of the lock assembly to the outer member 22 of the door 16. Different from those previously described, the locking members 38 are not carried by a component, but are rather discrete. The discrete locking members 38 pass through elongated apertures provided by the locking plate 88 and engage apertures (not shown) defined by the outer member 22 of the door 16 substantially as described above. In this matter, the locking plate 88 may slide relative to the outer member 22.

A button 100 is attached to the locking plate 88. The button 100 is normally biased along with the locking plate 88 to a latched position by a spring. The latched position is to the left direction in the drawings. The button 100 is manually movable to an unlatched position, again along with the locking plate 88, when the locking mechanism 28 is unlocked. The particular construction of the door assembly 10 allows for this movement from the latched to unlatched position to be accomplished with a single hand. In this regard, the user can insert his or her thumb into an aperture 102 adjacent the button 100 and his or her finger in a second aperture 104.

In the particular embodiment illustrated, the locking plate 88 is shown to include a plurality of tabs 106. As shown, the locking plate 88 includes five tabs 106. The tabs 106 cooperate with a corresponding number of apertures or slots (not particularly shown) carried by the outer member 32. The slots are provided in an upper side of an inwardly extending flange 108. When the button 100 and locking plate 88 are translated to the unlatched position, the tabs 106 align with the slots. In this position, the door proper 16 can be articulated to its open position. Upon releasing the button 100, the spring force translates the locking plate 88 to its latched position and the tabs 106 are positioned behind the flange 108. The plurality of tabs 106 at spaced apart positions along the locking plate 88 serve to secure the door proper 16 to the frame 18 in an improved manner. In this regard, the door proper 16 is secured along the length of an upper side of the frame 18.

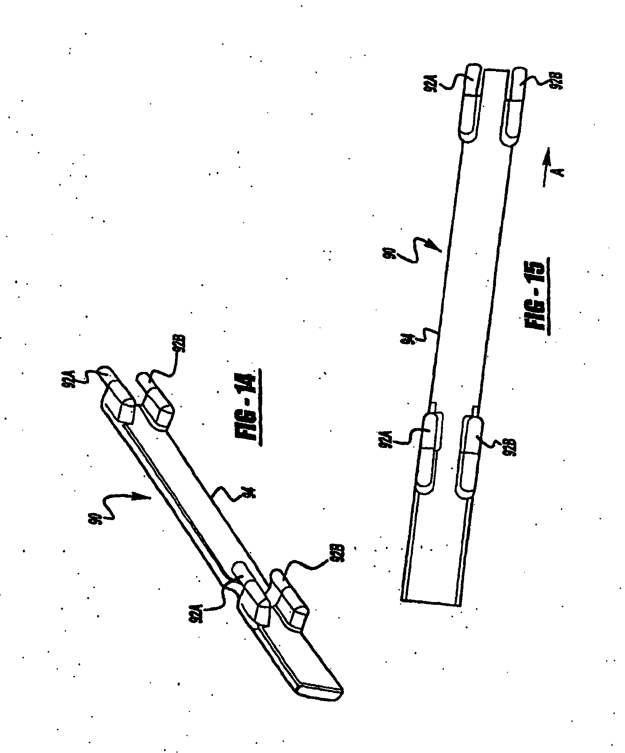

As shown in Figure 3, the hinge assembly 20 includes a pair of hinge members 90 that support the door 16 in a manner to be more fully described below. The hinge members 90 will be understood to be identical in all respects. With reference to Figures 14 and 15, an alternatively constructed hinge member 90' is shown removed from the door assembly 10. Both the hinge members 90 and 90' are shown to includes a plurality of hinge bars 92 connected by a generally planar plate 94. The primary difference between the hinge members 90 and the hinge members 90' is that the hinge bars 92 of the former are foreshortened. Otherwise, insofar as the present invention is concerned the hinge members 90 and 90' are identical.

The hinge bars 92 are generally parallel to and spaced from the plate 94. In the embodiments illustrated, the hinge bars 92 are four (4) in number and arranged in pairs. Each pair of hinge bars 92 have an upper hinge bar 92A and a lower hinge bar 92B.

With continued reference to Figures 3, 14 and 15, and additional reference to the cross-sectional views of Figures 16-18, the hinge assembly 20 will be further described. The upper hinge bars 92A are rotatably mounted on the outer member 22 of the door 16. The lower hinge bars 92B are rotatably mounted on the outer member 32 of the frame 18.

During assembly of the door assembly 10, a first one of the hinge members 90 or 90' is oriented with its hinge bars 92 extending in an outboard direction. The hinge bars 92 engage apertures defined by the door 16 and the frame 18 by moving the hinge member 90 in the outboard direction. This outboard direction is generally identified in Figure 15 at arrow A. The second one of the hinge members 90 or 90' is oriented with its hinge bars 92 extending in an opposite direction. In a similar manner, the apertures defined by the door 16 and the frame 18 are engaged by the second hinge member 90 or 90' by moving the second hinge member 90 or 90' in this opposite direction. When the hinge members 90 or 90' are in place, adjacent ends abut one another to thereby prevent inboard movement. In some application, it may be desirable to incorporate a tongue and groove arrangement between the opposing ends of the hinge members 90 or 90'. The hinge members 90 or 90' are preferably constructed of plastic or other suitable material that may be inelastically deformed to facilitate assembly.

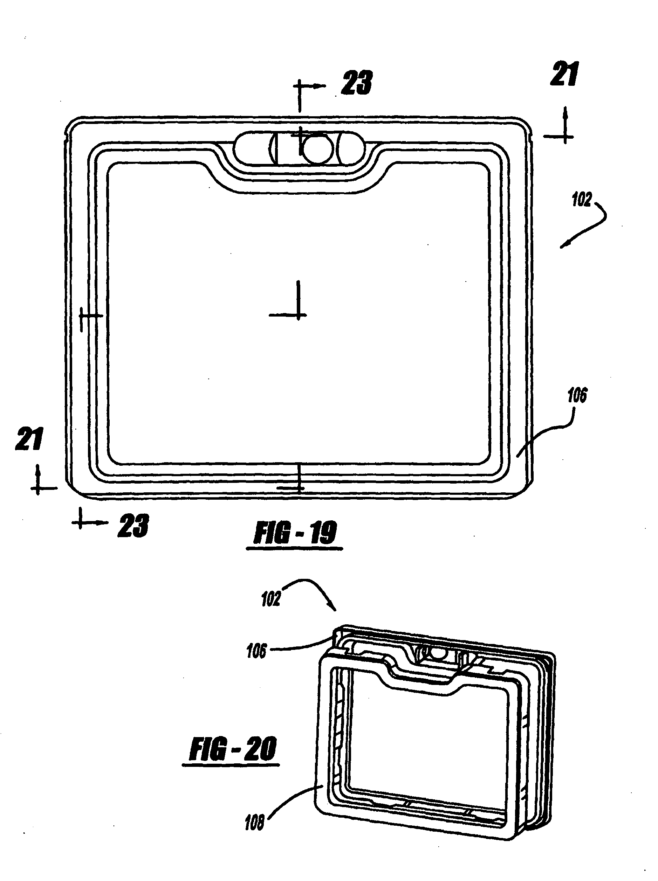

Turning to Figures 19-27, a service door assembly constructed in accordance with the teachings of a second embodiment of the present invention will be described. Similar to the service door assembly 10 of the first embodiment, the service door assembly of the second embodiment is intended to be mounted in an opening of a sidewall 14 and generally includes a door or door proper 102 and a frame 104. Insofar as the present invention is concerned, the service door assembly of the second embodiment differs from the service door assembly 10 of the first embodiment by incorporating cooperating means for automatically facilitating engagement between the first and second members as a portion of the sidewall is captured between the first and second members and prevent disengagement after the portion of the sidewall is captured between the first and second members. The cooperating means may also accommodate a variation in the thickness of the sidewall 14 in to both the door 102 and frame 104. In this regard, the teachings of the first embodiment of the present invention typically require a specific frame inner member 30 for a particular sidewall thickness. Similar limitations are associated with the door 16. As will become apparent below, the teachings of the second embodiment of the present invention utilize a common door 102 and a common frame 104 that are adapted to accommodate variations in sidewall thickness. To the extent not otherwise differentiated herein, it will be understood that the construction and operation (including the intended uses) of the service door assembly of the second embodiment are identical to the service door assembly 10 of the first embodiment.

With particular reference to Figures 19-24, the door 102 is illustrated to include an outer member 106 and an inner member 108. As with the service door assembly 10, a portion of the sidewall 14 removed to create the opening in the vehicle 12 is captured between the outer member 106 and the inner member 108 to create a laminated structure. This portion of the sidewall 14 is not particularly shown in connection with the door 102, but is illustrated in the environmental view of Figure 1 in connection with the first embodiment of the present invention.

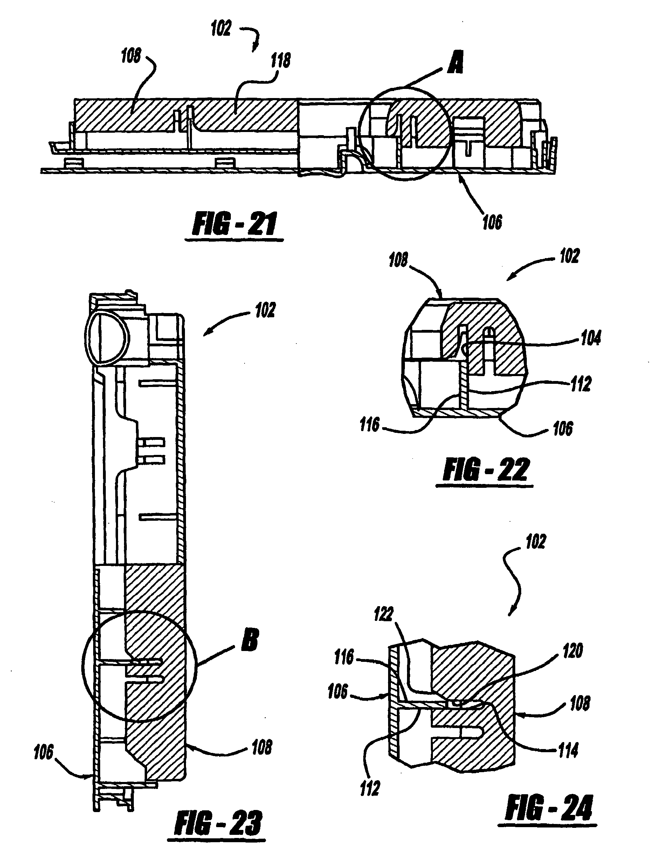

The door outer and inner members 106 and 108 include cooperating means for securing the door inner member 108 to the door outer member 106 to define a variable door thickness for accommodating variations in a thickness of the sidewall 14. In the embodiment illustrated, the cooperating means include first and second ratchet means. In one particular application, the cooperating means may include at least one tooth. As illustrated, the cooperating means may include at least a first plurality of teeth 112 carried by the door outer member 106 and a second plurality of teeth 114 carried by the door inner member 108. The first and second pluralities of cooperating teeth 112 and 114 are shown most particularly in the cross-sectional views of Figures 22 and 24.

In the embodiment illustrated throughout the drawings, the door 102 of the second embodiment of the present invention is shown to include multiple pairs of cooperating teeth. In one particular application, the door 102 includes two pair of cooperating teeth associated with each of the four sides of the door 102.

The pluralities of teeth 112 of the door outer member 106 are integrally defined on the arms 116 which rearwardly extend from a main body portion of the door outer member 106. The second plurality of teeth 114 of the door inner member 108 are integrally formed on a horizontally extending flange 118 which peripherally surrounds the door inner member 108. An opening 120 with a tapered lead-in portion 122 is positioned adjacent the second plurality of teeth 114 for receiving the arm 116.

In use, the portion of the sidewall 14 removed to define the opening in the vehicle 12 is trimmed to an appropriate size and positioned between the door outer and inner members 106 and 108. Advancement of the door outer and inner members 106 and 108 toward one another causes a ratcheted-engagement between the first and second pluralities of teeth 112 and 114. The teeth 112 and 114 are angled to facilitate insertion of the arm 116 into the opening 120 and prevent subsequent withdrawal of the arm 116 from the opening 120. As the arm 116 is inserted into the opening 120, the minimal thickness of the arm 116 permits slight deflection thereof. Continued insertion of the arm 116 into the opening 120 slightly compresses the core defined by the portion of the sidewall 14 captured between the door outer and inner members 106 and 108. The inherent resiliency of the core maintains a tension between the first and second pluralities of teeth 112 and 114.

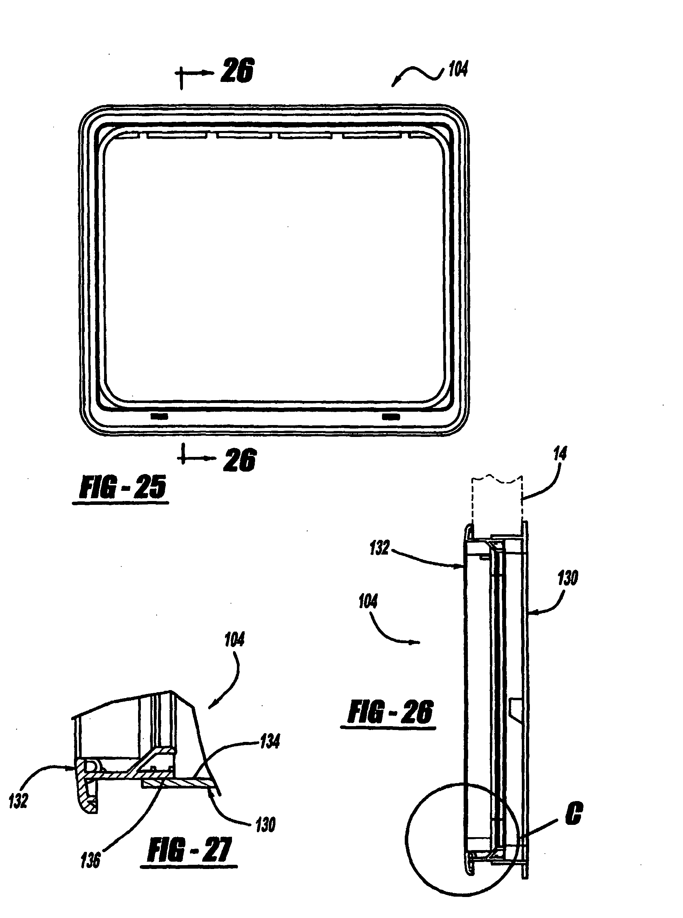

Referring to Figures 25 - 27, the frame 104 of the second embodiment of the present invention will be further described. As with the door 102, the frame 104 similarly includes a frame inner member 130 and a frame outer member 132 including cooperating means for securing the frame inner member 130 to the frame outer member 132 and defining a variable frame thickness for accommodating variations in a thickness of the sidewall 14 (shown in Figure 26 in hidden lines). In the embodiment illustrated, the cooperating means include first and second ratchet means. In one particular application, the cooperating means include at least a first plurality of teeth 134 carried by the frame inner member 130 and a second plurality of teeth 136 carried by the frame outer member 132. The first and second pluralities of cooperating teeth 134 and 136 are shown most particularly in the cross-sectional view of Figure 27. In the embodiment illustrated throughout the drawings, the frame 104 of the second embodiment of the present invention is shown to include multiple pairs of cooperating teeth.

The pluralities of teeth 134 of the frame inner member 130 are integrally defined on the inside of a forwardly extending flange which peripherally surrounds the frame inner member 130. The second plurality of teeth 136 of the frame outer member 136 are carried on an insert mounted to a horizontally extending flange which peripherally surrounds the frame outer member 132. Alternatively, the second plurality of teeth 136 may be formed integrally with the frame outer member 136.

In use, a portion of the sidewall 14 is captured between outer peripheral edges of the frame inner and outer members 130 and 132. Advancement of the frame inner and outer members 130 and 132 toward one another causes a ratcheted-engagement between the first and second pluralities of teeth 134 and 136. The teeth 134 and 136 are angled to facilitate engagement and prevent subsequent disengagement. As the inner and outer members 130 and 132 are advanced toward one another, the portion of the sidewall 14 captured between the outer peripheral edges of the frame inner and outer members 130 and 132 is slightly compressed. The inherent resiliency of the sidewall 14 maintains a tension between the first and second pluralities of teeth 130 and 132.

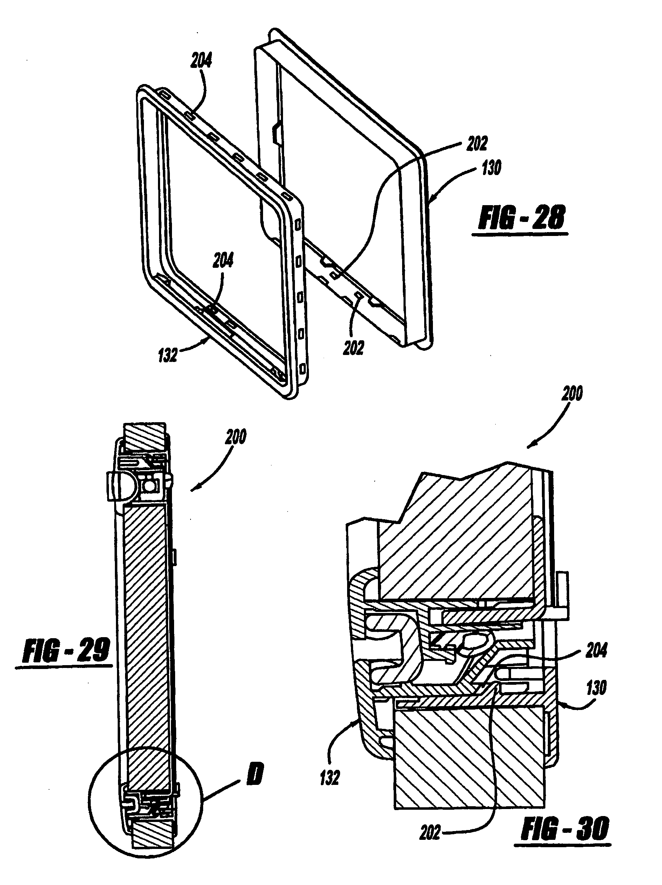

Turning to Figures 28-30, a service door assembly constructed in accordance with the teachings of a third embodiment of the present invention is illustrated and identified generally at reference character 200. Insofar as the present invention is concerned, the service door assembly 200 differs from the service door assembly 100 by incorporating an alternative arrangement for securing inner 130 and outer members 132 of the door frame 104 to one another. In view of the similarities between these embodiments, like reference numbers will be used to identify similar elements throughout the views.

One of the frame inner member 130 and the frame outer member 132 includes one or more male elements 202 that cooperate with a corresponding number of female elements 204 defined by the other of the inner and outer members 130 and 132. The one or more male elements 202 and the one or more female elements 204 serve as cooperating means for automatically facilitating engagement between the first and second members as a portion of the sidewall is captured between the first and second members and prevent disengagement after the portion of the sidewall is captured between the first and second members. As particularly shown, the inner member 130 may be formed to include a plurality of male elements in the form of integrally formed teeth or snaps 202. The snaps 202 are received in corresponding apertures 204 of the outer member 132 upon assembly of the frame inner and outer members 130 and 132.

The snaps 202 may be configured to define an angled lead-in face or surface and a generally perpendicular trailing face or surface. The lead-in surface facilitates assembly of the inner and outer members 130 and 132. The trailing surface prevents the inner and outer members 130 and 132 from inadvertently becoming disassembled.

## Claims

1. A subassembly of a service door assembly (200) for mounting in an opening of a sidewall (14) having a thickness, the subassembly includes a first member (130) and a second member (132) secured to the first member (130), the first member (130) and second member (132) capturing at least a portion of the sidewall therebetween, the first and second members (130, 132) including cooperating means for securing the first and second members (130, 132) together, the cooperating means configured to automatically facilitate engagement between the first and second members (130, 132) as a portion of the sidewall is captured between the first and second members (130, 132) and prevent disengagement after the portion of the sidewall is captured between the first and second members (130,132), the cooperating means includes a first element carried by the first member (130) and a cooperating second element carried by the second member (132), **characterised in that** the first element is a tooth (202) and the second element is an aperture (204) for receiving the tooth, the tooth (202) defines an angled lead-in face for facilitating engagement between the first and second members and a generally vertical trailing face for preventing disengagement of the first and second members (130, 132).

2. The subassembly of a service door assembly (200) of claim 1, wherein the cooperating means defines a variable thickness for accommodating variations in a thickness of the side wall.

3. The subassembly of a service door assembly (200) of claim 1, wherein the subassembly is a door for mounting to a frame, a portion of the sidewall captured between the first and second members (130, 132).

4. The subassembly of a service door assembly (200) of claim 1, wherein the subassembly is a frame.

## Patentansprüche

1. Unterbaugruppe einer Servicetürbaugruppe (200) zur Befestigung in einer Öffnung einer Seitenwand (14) mit einer Dicke, wobei die Unterbaugruppe ein erstes Element (130) und ein an dem ersten Element (130) gehaltenes zweites Element (132) aufweist, wobei das erste Element (130) und das zweite Element (132) wenigstens einen Abschnitt der Seitenwand zwischen sich ergreifen, wobei das erste und zweite Element (130, 132) zusammenwirkende Mittel zum Zusammenhalten des ersten und zweiten Elements (130, 132) aufweisen, wobei die zusammenwirkenden Mittel so ausgelegt sind, dass sie automatisch ein Eingreifen zwischen dem ersten und zweiten Element (130, 132) ermöglichen, während ein Abschnitt der Seitenwand zwischen dem ersten und zweiten Element (130, 132) ergriffen wird, und ein Lösen des Zusammenhalts verhindern, nachdem der Abschnitt der Seitenwand zwischen dem ersten und zweiten Element (130, 132) ergriffen ist, wobei die zusammenwirkenden Mittel eine erste von dem ersten Element (130) getragene Komponente und eine zusammenwirkende zweite von dem zweiten Element (132) getragene Komponente aufweisen, **dadurch gekennzeichnet, dass** die erste Komponente ein Zahn (202) und die zweite Komponente eine Öffnung (204) zur Aufnahme des Zahns ist und der Zahn (202) eine abgewinkelte vorlaufende Fläche, mit der ein Eingreifen zwischen dem ersten und zweiten Element ermöglicht wird, und eine im Allgemeinen senkrechte nachlaufende Fläche festlegt, mit der ein Lösen des ersten und zweiten Elements (130, 132) verhindert wird.

2. Unterbaugruppe einer Servicetürbaugruppe (200) nach Anspruch 1, wobei die zusammenwirkenden Mittel eine veränderliche Dicke zum Anpassen an Unterschiede in einer Dicke der Seitenwand festlegen.

3. Unterbaugruppe einer Servicetürbaugruppe (200) nach Anspruch 1, wobei die Unterbaugruppe eine Tür zur Befestigung an einem Rahmen ist, wobei ein Abschnitt der Seitenwand zwischen dem ersten und zweiten Element (130, 132) gegriffen ist.

4. Unterbaugruppe einer Servicetürbaugruppe (200) nach Anspruch 1, wobei die Unterbaugruppe ein Rahmen ist.

## Revendications

1. Sous-ensemble d'un ensemble de porte de service (200) pour monter dans une ouverture d'une paroi latérale (14) ayant une épaisseur, le sous-ensemble comprenant un premier membre (130) et un second membre (132) fixé au premier membre (130), le premier membre (130) et le second membre (132) capturant au moins une portion de la paroi latérale entre eux, les premier et second membres (130, 132) comprenant des moyens de coopération pour fixer les premier et second membres (130, 132) ensemble, les moyens de coopération étant configurés pour faciliter automatiquement l'engagement entre les premier et second membres (130, 132) alors qu'une portion de la paroi latérale est capturée entre les premier et second membres (130, 132) et pour empêcher le désengagement après que la portion de la paroi latérale est capturée entre les premier et second membres (130, 132), les moyens de coopération comprenant un premier élément porté par le premier membre (130) et un second élément de coopération porté par le second membre (132), **caractérisé en ce que** le premier élément est une dent (202) et le second élément est une ouverture (204) pour recevoir la dent, la dent (202) définissant une face d'entrée angulée pour faciliter l'engagement entre les premier et second membres et une face de sortie généralement verticale pour empêcher le désengagement des premier et second membres (130, 132).

2. Sous-ensemble d'un ensemble de porte de service (200) selon la revendication 1, dans lequel les moyens de coopération définissent une épaisseur variable pour accepter des variations d'une épaisseur de la paroi latérale.

3. Sous-ensemble d'un ensemble de porte de service (200) selon la revendication 1, dans lequel le sous-ensemble est une porte pour monter à un châssis, une portion de la paroi latérale étant capturée entre les premier et second membres (130, 132).

4. Sous-ensemble d'un ensemble de porte de service (200) selon la revendication 1, dans lequel le sous-ensemble est un châssis.
